# EUROPEAN PATENT APPLICATION

(11) **EP 4 001 039 A1**
(43) Date of publication of application: **25.05.2022**
(21) Application number: 20208184.0
(22) Date of filing: 17.11.2020
(51) Int. Cl.: B60W 30/17, B60W 30/16, B60W 30/18, B60W 40/04, B60W 50/00

(54) **VEHICLE ADAPTIVE CRUISE CONTROL SYSTEM AND METHOD; COMPUTER PROGRAM AND COMPUTER READABLE MEDIUM FOR IMPLEMENTING THE METHOD**

(71) Applicant: Toyota Jidosha Kabushiki Kaisha, Toyota-shi, Aichi-ken 471-8571 (JP)
(72) Inventor: MUYSHONDT, Matthias, 1140 Brussels (BE)
(74) Representative: Cabinet Beau de Loménie

(57) **Abstract**

An adaptive cruise control system (100) for a vehicle, comprising:
a stop location determination system (152) configured to determine a stop location where the vehicle will have to stop because of a possible event occurring ahead of the vehicle on a road where the latter is moving ;
a cross traffic location determination system (160) configured to determine whether the determined stop location (SL) is a location where cross traffic can occur, called cross traffic location (CTL);
an adaptive control system (170) configured to adapt at least one driving control of the vehicle, based on the determination that the determined stop location (SL) is a cross traffic location (CTL).

## Description

### FIELD OF THE DISCLOSURE

The present disclosure concerns a vehicle adaptive cruise control system and an adaptive cruise control method for controlling operation of a vehicle.

### BACKGROUND OF THE DISCLOSURE

Adaptive cruise control systems for motor vehicles are known.

Current adaptive cruise control systems aim at controlling the distance of a vehicle, called ego vehicle, with the preceding vehicle. In start and stop conditions such as, e.g. in a traffic jam, these systems aim at keeping a fixed distance to the preceding vehicle. According to different areas throughout the world (USA, Europe, Japan) predetermined distance setting can take place.

US 2009/0299598 A1 discloses an advanced cruise control system which automatically detects a traffic jam situation and then adapts the control parameters automatically to the special conditions of such a traffic jam.

In particular, the advanced cruise control system has a sensor system for locating preceding vehicles and a controller which regulates the speed of the ego vehicle and/or the clearance from a preceding vehicle, based on specified control parameters.

The above advanced cruise control system is focused on a situation in which a traffic jam situation is detected while an ego vehicle is moving on a road.

However, the situation where an object located on the road ahead of the ego vehicle causes the latter to stop and cross traffic can occur between the ego vehicle and the object is not addressed by this system.

Such a situation can have an impact on the traffic flow and it would thus be desirable to reduce as much as possible this possible impact.

### DISCLOSURE OF THE INVENTION

According to a first purpose of the present disclosure a vehicle adaptive cruise control system may be configured to improve traffic flow and, in particular, to make possible to keep free locations where cross traffic can be expected between a vehicle and an object located ahead of the vehicle and forcing the latter to stop.

To meet this purpose, according to the present disclosure a vehicle adaptive cruise control system is proposed. This system comprises:
a stop location determination system configured to determine a stop location where the vehicle will have to stop because of a possible event occurring ahead of the vehicle on or near a road where the latter is moving;
a cross traffic location determination system configured to determine whether the determined stop location is a location where cross traffic can occur, called cross traffic location;
an adaptive control system configured to adapt at least one driving control of the vehicle, based on the determination that the determined stop location is a cross traffic location.

Thus, when taking account of the normal or standard stop location where the vehicle, called ego vehicle, should normally stop according to predefined rules and/or calculations (because of the possible occurrence of an event on or near the road that forces or should force the ego vehicle to stop) and of the presence of a cross traffic location, the system makes it possible to adapt the behaviour of the ego vehicle accordingly, in particular to adapt at least one driving control of the ego vehicle. For example, the adapted behaviour will cause the ego vehicle to stop earlier (at a shorter distance) than expected with the determined stop location. The ego vehicle will then be able to stop at a distance from the determined stop location. This will make it possible to avoid the ego vehicle to stop at a cross traffic location, i.e. at a location where cross traffic is likely to occur, and then impede the traffic flow. This will also make it possible to let free the passage that corresponds to the cross traffic location and thus enable cross traffic to take place.

According to further possible aspects:
- the adaptive control system is configured to adapt said at least one driving control so as to cause the vehicle to stop at an adapted stop location that is located closer than the determined stop location with respect to the vehicle ;
- the adapted stop location is chosen so that another vehicle or a pedestrian can cross the road where the vehicle is moving and pass between the vehicle and an object located ahead of the vehicle;
- the adapted stop location is chosen based on one of the following: a width of a crossing path together with a predetermined margin (the crossing path may be a pedestrian crossing), a width of a vehicle lane together with a predetermined margin (the vehicle lane may be that one of a road crossing the road on which the vehicle is moving ahead of the latter), a width of two vehicle lanes together with a predetermined margin (this is the case when cross traffic can occur in both directions); in the above-mentioned cases a predetermined margin (distance) is added to the width of concern in order to ensure that the adapted stop location will not encroach upon the crossing path or the lane(s) (cross traffic location);
- the cross traffic location is chosen among the following: a T junction, a pedestrian crossing, a crossroads, a location on the road that faces a vehicle entry or exit such as a public parking entry or exit, a fire brigade exit etc.;
- the system further comprises a detection system configured to detect possible events occurring ahead of the vehicle on or near the road where the latter is moving and for which the vehicle will have to stop;
- the possible events include an object located on the road ahead of the vehicle or a traffic jam; the object may be one of the following: a preceding vehicle, a vehicle that is double parked, an obstacle fallen on the road, a road sign, road works, a bus stop;
- the detection system is configured to detect whether the vehicle will have to stop, based on information relating to the vehicle and its environment; information relating to the vehicle and its environment includes vehicle speed obtained from a vehicle speed sensor, vehicle surrounding information obtained from one or more vehicle radars, lidars, cameras, and static/dynamic information obtained from a vehicle navigation system;
- the detection system is further configured to take into account the position, trajectory, speed and acceleration of at least one mobile object and the position of at least one stationary object (in the environment of the vehicle); this information that is taken into account makes it possible to identify situations where one or more mobile objects, such as other vehicles, may block the road ahead of the vehicle and/or cross the road in front of the vehicle at a cross traffic location, possibly moving from a side location relative to the road;
- the detection system is further configured to detect possible occurrence of cross traffic on or near the road where the vehicle is moving;
- the detection system is further configured to take into account traffic information and day time;
- the adaptive control system is further configured to adapt at least one driving control of the vehicle, based on the possible occurrence or absence of occurrence of cross traffic on or near the road where the vehicle is moving;
- the detection system includes a probabilistic detection system;
- said at least one driving control includes a longitudinal control;
- the cross traffic location determination system is configured to obtain information from one or more cameras and/or a vehicle navigation system.

The present disclosure further encompasses a vehicle comprising a vehicle adaptive cruise control system as briefly defined above

A second purpose of the present disclosure is to propose an adaptive cruise control method for controlling operation of a vehicle. The method comprises:
determining a stop location where the vehicle will have to stop because of a possible event occurring ahead of the vehicle on or near a road where the latter is moving;
determining whether the determined stop location is a location where cross traffic can occur, called cross traffic location;
adapting at least one driving control of the vehicle, based on determining that the determined stop location is a cross traffic location.

According to further possible aspects:
- the method further comprises adapting said at least one driving control so as to cause the vehicle to stop at an adapted stop location that is located closer than the determined stop location with respect to the vehicle;
- the adapted stop location is chosen so that another vehicle or a pedestrian can cross the road where the vehicle is moving and pass between the vehicle and an object located ahead of the vehicle;
- the adapted stop location is chosen based on one of the following: a width of a crossing path together with a predetermined margin (the crossing path may be a pedestrian crossing), a width of a vehicle lane together with a predetermined margin (the vehicle lane may be that one of a road crossing the road on which the vehicle is moving ahead of the latter), a width of two vehicle lanes together with a predetermined margin (this is the case when cross traffic can occur in both directions); in the above-mentioned cases a predetermined (distance) added to the width of concern in order to ensure that the adapted stop location will not encroach upon the crossing path or the lane(s) (cross traffic location);
- the method further comprises detecting possible events occurring ahead of the vehicle on or near the road where the latter is moving and for which the vehicle will have to stop;
- the possible events include an object located on the road ahead of the vehicle or a traffic jam; the object on the road may be one of the following: a preceding vehicle, a vehicle that is double parked, an obstacle fallen on the road, a road sign, roadworks, a bus stop;
- detecting whether the vehicle will have to stop is based on information relating to the vehicle and its environment; information relating to the vehicle and its environment includes vehicle speed obtained from a vehicle speed sensor, vehicle surrounding information obtained from one or more vehicle radars, lidars, cameras, and static/dynamic information obtained from a vehicle navigation system;
- detecting possible events further comprises taking into account the position, trajectory, speed and acceleration of at least one mobile object and the position of at least one stationary object; this information that is taken into account makes it possible to identify situations where one or more mobile objects, such as other vehicles, may block the road ahead of the vehicle and/or cross the road in front of the vehicle at a cross traffic location, possibly moving from a side location relative to the road;
- detecting possible events further comprises detecting possible occurrence of cross traffic on or near the road where the vehicle is moving; such a detection makes it possible to determine or estimate whether cross traffic can occur when the vehicle is at a cross traffic location or about to arrive there, while a stop event has been detected farther ahead on the road;
- detecting possible events further comprises taking into account traffic information and day time; this makes it possible to determine or estimate more reliably the possibility of cross traffic in accordance with the traffic information and time of the day; for example, if the vehicle is moving at a certain instant time on a day and traffic information indicates a very low vehicle traffic, or even no vehicle traffic, in particular at a cross traffic location (ex: intersection) ahead of the vehicle, then it might not be necessary to adapt at least one driving control of this vehicle so as to keep free the cross traffic location;
- the adaptive control system is further configured to adapt at least one driving control of the vehicle, based on the possible occurrence or absence of occurrence of cross traffic on or near the road where the vehicle is moving; based on such an information, it might not be necessary to adapt at least one driving control of this vehicle so that the latter stop before arriving at the cross traffic location with a view to keeping free the cross traffic location; -detecting whether the vehicle will have to stop is based on a probabilistic approach.

In a particular implementation, the proposed method is determined by computer program instructions.

Accordingly, another purpose the present disclosure is to propose a computer program comprising instructions which, when the program is executed by a computer, cause the computer to carry out the steps of the above-defined method. The computer program may use any programming language, and be in the form of source code, object code, or code intermediate between source code and object code, such as in a partially compiled form, or in any other desirable form. The computer may be any data processing means, for instance a personal computer, an electronic control unit configured to be mounted in a vehicle, a smartphone, a laptop, etc.

The present disclosure also includes a non-transitory computer readable medium having the above-defined computer program stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

### BRIEF DESCRIPTION OF THE DRAWINGS

The present invention may be better understood and its numerous other objects and advantages will become apparent to those skilled in the art by reference to the accompanying drawings wherein like reference numerals refer to like elements in the several figures and in which :
Figure 1 is a schematic functional representation of a vehicle driving and monitoring system including a vehicle adaptive cruise control system according to the present disclosure;
Figure 2 is a schematic representation of the material components of the vehicle system of Figure 1 in a vehicle;
Figures 3A-B and 4A-C are schematic representations of different scenes, on which the vehicle of Figures 1 and 2 is moving;
Figure 5 is a block diagram representing an embodiment of a method for adapting cruise control on a vehicle according to the present disclosure.

### DESCRIPTION OF PREFERRED EMBODIMENTS

A vehicle adaptive cruise control system according to the present disclosure will now be presented.

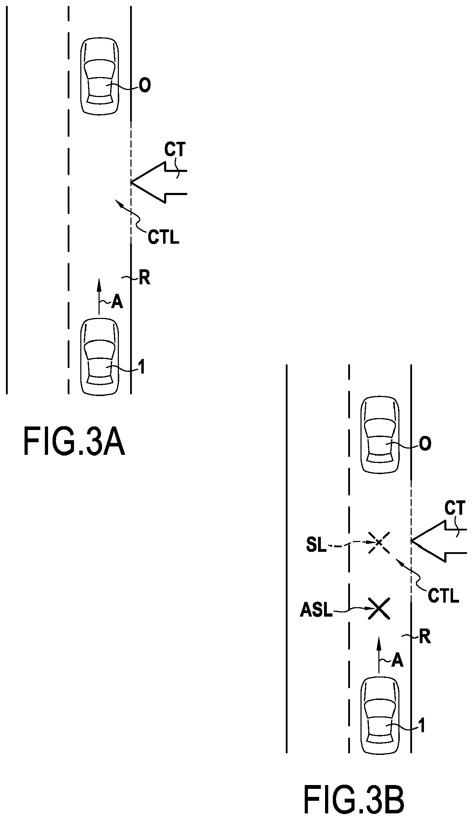

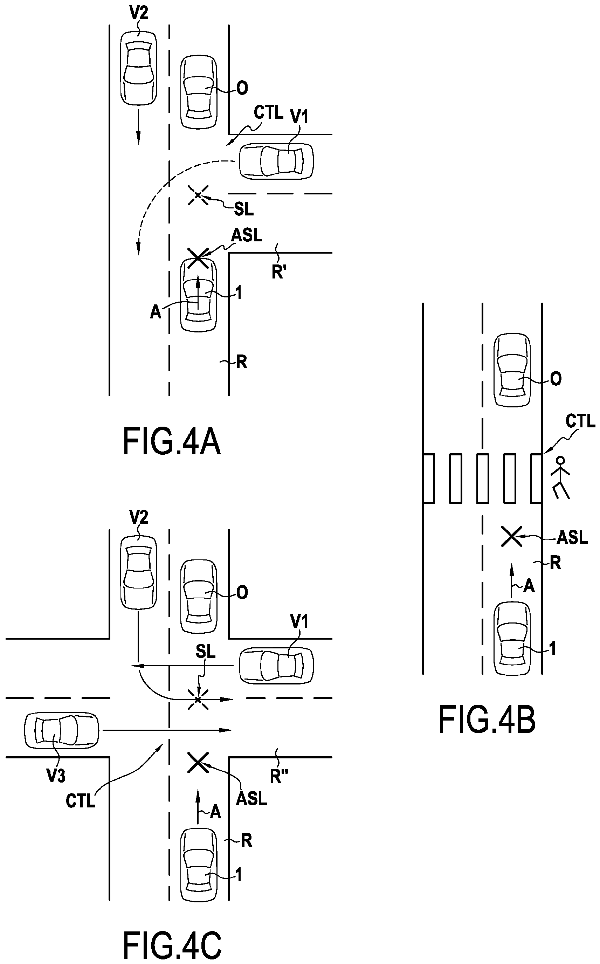

The functioning of the vehicle adaptive cruise control system is illustrated through examples shown on Figures 3A-B and 4A-C where this system is presented in operation, mounted on a vehicle 1, called the ego vehicle.

These Figures 3A-B and 4A-C show different scenes where ego vehicle 1 is moving along a motion direction A, on the right lane of a road R.

Vehicle 1 is a hybrid car, which represents a non-limiting example of a vehicle on which a vehicle adaptive cruise control system according to the present disclosure may be mounted.

### GENERAL ARCHITECTURE OF SYSTEM 1000

### Functional architecture

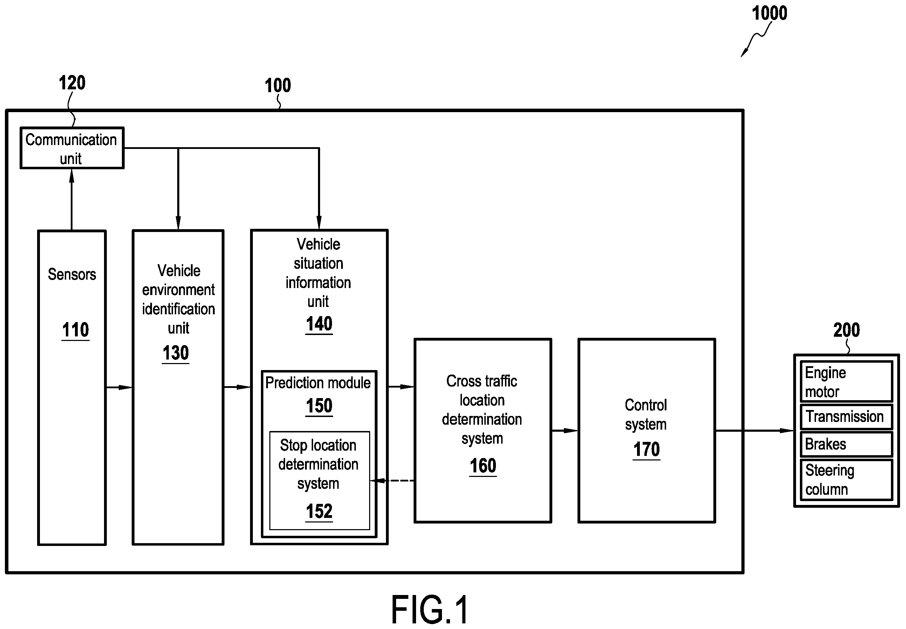

A vehicle monitoring and driving system 1000, capable of driving vehicle 1, e.g. in automated mode, is represented in Figure 1 and the vehicle adaptive cruise control system according to the present disclosure may be part of system 1000 as will be explained thereafter.

The functional architecture of system 1000 is shown schematically on Figure 1. Overall only the systems and components that are useful for understanding the invention are apparent on the appended Figures.

As a general manner, in order to perform its driving function, system 1000 comprises an adaptive cruise control system 100, which is configured to control a drive system 200 that is capable of driving the vehicle 1.

The drive system 200 is the set of core components which operatively drive vehicle 1 and control its movement. These components include its engine/motor(s) (as the case may be), brakes, transmission, steering column, etc.

Driving system 1000 can therefore control acceleration, braking and turning of vehicle 1 through drive system 200. The vehicle driving system 1000 can be capable of driver assistance at level 1 or 2, or capable of automated driving at level 3, 4 or 5.

In order to drive vehicle 1 in 'manual mode', the driver can use a steering wheel, brakes/clutch/accelerator pedals, buttons, touchscreens, etc., so as to control the drive system 200. These components collectively constitute a vehicle input system, which forms part of system 1000.

### Material architecture

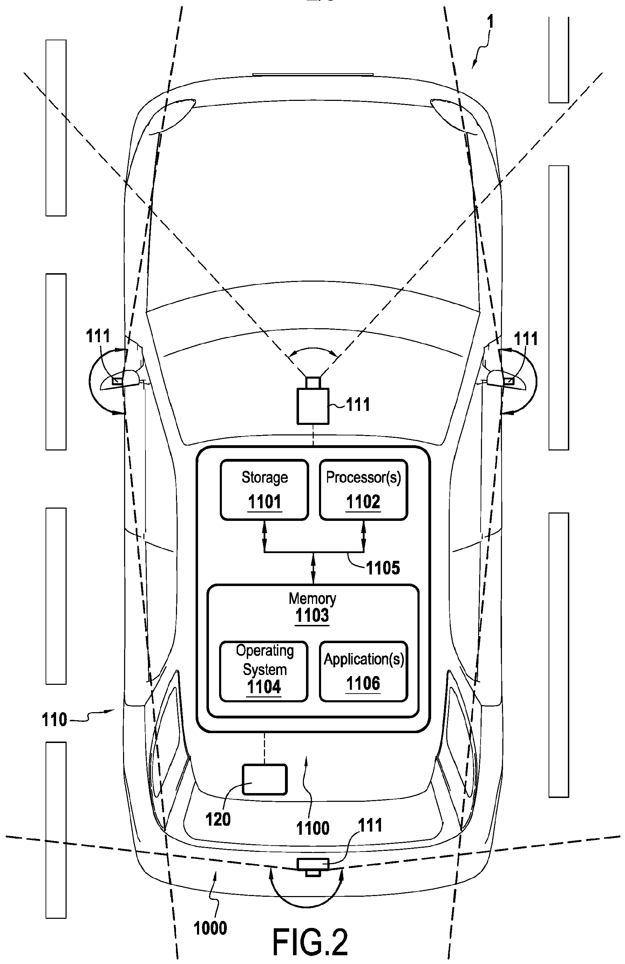

The material architecture of system 1000 is shown schematically on Figure 2. It is composed mainly of a central driving computer 1100, mounted on vehicle 1.

To be noted that most hardware components of system 1000 are shared components, which are used to perform multiple tasks. For this reason, the hardware components which constitute the adaptive cruise control system 100 perform the functions of system 100, but also perform other functions for system 1000 which are not of interest for the present disclosure.

In addition, although the driving computer 1100 in this embodiment is physically located in vehicle 1, it does not necessarily need to be in the vehicle. Actually, it can be located anywhere, as long as communication equipment is provided to transmit the necessary inputs to computer 1100, and to transmit the calculated controls to the drive system 200, in real time, so as to drive vehicle 1, and possibly to transmit other calculated information to output systems (such as a display not represented here) for it to be displayed or outputted.

Moreover, although the driving computer 1100 is represented on Figure 2 in a single box, it may comprise one or more processors, and can therefore be a distributed calculation system, distributed over a plurality of processors, possibly physically arranged on different locations.

As shown in Figures 1 and 2, the adaptive cruise control system 100 comprises a set of sensors 110 and a communication unit 120.

The sensors 110 are a set of sensors which may comprise one or more cameras, lidar(s), radar(s), ultra-sound proximity sensor(s), speed sensor(s), an inertial measurement unit (IMU), and a navigation unit (GPS). The camera(s), lidar(s), radar(s), ultra-sound proximity sensor(s) and speed sensor(s) of sensors 110 may be mounted on the front, back and sides of vehicle 1 (among sensors 110, only four external cameras 111 are shown on Figure 2). Preferably, the cameras 111 may be arranged so as to acquire a full 360° view around vehicle 1.

The communication unit 120 comprises a set of telecommunications components. These components make it possible for vehicle 1 (that is, for the systems aboard vehicle 1, and for the occupants of vehicle 1) to communicate with its environment. The communication unit 120 for instance enables communication between vehicle 1 and the infrastructure (V2I communication), other vehicles (V2V communication), and/or with more distant machines or persons.

The functions (the functional units) of the vehicle adaptive cruise control system 100 are implemented on the computer system 1100.

Computer system 1100 comprises a storage 1101, one or more processor(s) 1102, a memory 1103, an operating system 1104, a communication infrastructure 1105 and additional applications 1106.

The computer system 1100, in particular in its memory 1103, stores instructions which when executed by the one or more processor(s) 1102 cause the latter to implement the different functional units or systems of system 1000, in particular those of the vehicle adaptive cruise control system 100.

The one or more processors 1102 are intended to be representative of the presence of any one or more processors or processing devices, of any of a variety of forms. For example, the processor(s) 1102 is intended to be representative of any one or more of a microprocessor, a central processing unit (CPU), a controller, a microcontroller unit, an application-specific integrated circuit (ASIC), an application-specific instruction-set processor (ASIP), a graphics processing unit (GPU), a digital signal processor (DSP), a field programmable gate array (FPGA), a programmable logic device (PLD), a physics processing unit (PPU), a reduced instruction-set computer (RISC), or the like, or any combination thereof. The processor(s) 102 can be configured to execute program instructions including, for example, instructions provided via software, firmware, operating systems, applications, or programs, and can be configured for performing any of a variety of processing, computational, control, or monitoring functions.

The communication infrastructure 1105 is a data bus to which all the above-mentioned sensors 110 and the communication unit 120 are connected, and therefore through which the signals outputted by these sensor units and this communication unit are transmitted to the other components of system 1000.

The storage 1101, the processor(s) 1102, the memory 1103, and the operating system 1104 are communicatively coupled over the communication infrastructure 1105. The operating system 1104 may interact with other components to control one or more applications 1106. All components of system 1000 are shared or possibly shared with other units or items of equipment of vehicle 1.

A computer program to perform vehicle control and, in particular vehicle adaptive cruise control, according to the present disclosure is stored in memory 1103. This program and the memory 103 are examples respectively of a computer program and a computer-readable recording medium pursuant to the present disclosure.

The memory 1103 of the computer system 1100 indeed constitutes a recording medium according to the invention, readable by the one or more processor(s) 1102 and on which said program is recorded.

The systems and methods described herein can be implemented in software or hardware or any combination thereof. The systems and methods described herein can be implemented using one or more computing devices which may or may not be physically or logically separate from each other.

The systems and methods described herein may be implemented using a combination of any of hardware, firmware and/or software. The present systems and methods described herein (or any part(s) or function(s) thereof) may be implemented using hardware, software, firmware, or a combination thereof and may be implemented in one or more computer systems or other processing systems.

In one or more embodiments, the present embodiments are embodied in vehicle-executable instructions. The instructions can be used to cause a processing device, for example a general-purpose or special-purpose processor, which is programmed with the instructions, to perform the steps of the present disclosure and, in particular, the steps of the vehicle adaptive cruise control method. Alternatively, the steps of the present disclosure can be performed by specific hardware components that contain hardwired logic for performing the steps, or by any combination of programmed computer components and custom hardware components. For example, the present disclosure can be provided as a computer program product, as outlined above. In this environment, the embodiments can include a vehicle-readable medium having instructions stored on it. The instructions can be used to program any processor or processors (or other electronic devices) to perform a process or method according to the present exemplary embodiments. In addition, the present disclosure can also be downloaded and stored on a computer program product.

The methods can be implemented in a computer program product accessible from a computer-usable or computer-readable storage medium that provides program code for use by or in connection with a computer or any instruction execution system. A computer-usable or computer-readable storage medium can be any apparatus that can contain or store the program for use by or in connection with the computer or instruction execution system, apparatus, or device.

### ADAPTIVE CRUISE CONTROL SYSTEM 100

The functional units of adaptive cruise control system 100 comprise a vehicle environment identification unit 130, a vehicle information situation unit 140, a cross traffic location determination system 160 and a vehicle adaptive control system 170.

In the adaptive cruise control system 100, the sensors 110 are configured to acquire all the information that can be gathered relative to the surroundings of vehicle 1, as known per se. This information constitutes the main part of the 'environmental information'. When vehicle 1 is in operation, sensors 110 acquire information periodically at successive time steps or instants, in real time. Usually, a constant interval is set between these successive time steps, for instance 25 ms.

All the information acquired by sensors 110 and all the information acquired from other machines (e.g., from a database containing a map of the region where vehicle 1 is moving) by the communication unit 120 is transmitted to the vehicle environment identification unit 130. This information can include in particular image sequences acquired by cameras, clouds of (3D-) points outputted by lidars, etc.

Based on the environmental information, the vehicle environment identification unit 130 performs data fusion to obtain 2D- or 3D- data (for instance a point cloud), geolocalized around vehicle 1. Based on this latter information and/or on the environmental information, the vehicle environment identification unit 130 (preferably at each time step) identifies the stationary elements and the mobile objects which are around vehicle 1.

The stationary elements or objects are the elements of the infrastructure: the surface of the road, preferably in particular the road markings; the traffic signs such as traffic lights, stop signs; the crossing paths, e.g. the pedestrian crossings, the T junctions, the crossroads, the curbs, buildings, trees, street lights, shop entries/exits, fire brigade exits, garage exits, more generally vehicle exits, parking spaces etc. To detect these elements, the vehicle environment identification unit 130 can possibly rely on a (predetermined) map of the surroundings of the vehicle (for instance a map obtained through the navigation unit) and, in a complementary manner, use data acquired through cameras and sensors if some of these elements cannot be obtained by such a map (ex: pedestrian crossings, parking spaces). This map can be stored in a memory of system 1000, or can be downloaded via communication unit 120.

The mobile objects are the other vehicles, the robots, the pedestrians, the animals.

To detect and identify the stationary elements and the mobile objects, the vehicle environment identification unit 130 preferably also relies on the identification of stationary elements and mobile objects performed at previous time steps.

The vehicle environment identification unit 130 establishes a model of the surroundings of the vehicle. This model can be in 2D or in 3D. It can include numeric and/or semantic information. It preferably includes data defining the stationary elements and the mobile objects identified around vehicle 1, if they have been identified.

This model preferably comprises the shape(s) of the stationary element(s) and/or the mobile object(s) detected around the vehicle.

Usually, the environmental information is periodically acquired from sensors 110 and communication unit 120. On this basis, the vehicle environment identification unit 130 usually updates periodically at each time step the model of the surroundings of the vehicle. For instance, vehicle environment identification unit 130 may update at each time step its model of the environment of the vehicle, in which the detected elements and/or mobile objects are described in 2D or 3D.

The vehicle information situation unit 140 uses the model of the surroundings of the ego vehicle, as calculated by the vehicle environment identification unit 130, to analyse the situation of the vehicle. Based on this information, it calculates situation information of the vehicle. The situation information of the vehicle is information describing the situation of the vehicle and of the surrounding mobile objects, with respect to the above-mentioned elements of the infrastructure. It preferably includes past and present information about the position, trajectory, speed, acceleration, of the vehicle and of the mobile objects surrounding the vehicle. For instance, this information includes a record of these values over the last period, e.g. during the last 10 seconds.

The vehicle information situation unit 140 further includes a prediction module 150 which calculates/generates predicted or estimated information describing the situation of the vehicle and of the surrounding mobile objects, with respect to the infrastructure. This calculated/generated predicted or estimated information may be based on machine learning based on collected and annotated driving data.

Such calculated/generated predicted or estimated information preferably comprises information about the future estimated position, trajectory, speed, acceleration, of the ego vehicle and of the mobile objects surrounding the latter with respect to the infrastructure. In particular, this information can include information about a possible traffic jam that is occurring or about to be occurring ahead of the ego vehicle on the road where the latter is moving. The calculated/generated predicted or estimated information about the traffic jam may be based on a probabilistic approach using, e.g. the number and speed of vehicles ahead of the ego vehicle, the distance between the latter and these vehicles, the speed of the ego vehicle, traffic information, etc. Such information may be obtained through camera(s) (ex: front facing camera 111 in Figure 2), radar, speed sensors, acceleration sensors of the IMU, the navigation unit.

As a general manner, the vehicle adaptive control system 170 uses the trajectory, speed and acceleration deemed preferable for the ego vehicle 1 in the time period ahead to generate/determine the driving controls to be sent to the drive unit 200. Based on these controls, the drive unit 200 drives vehicle 1 so as to follow the expected trajectory at the expected speed and acceleration.

In the present disclosure, some or all of the above described information generated/calculated by vehicle information situation unit 140 is used in order to generate, through vehicle adaptive control system 170, adapted driving control(s) for drive system 200, in particular driving controls that take into account situations that will be described with reference to Figures 3A, 3B and 4A, 4B and 4C and many other possible situations that are not depicted here.

These situations are taken into account by the above-described situation information of the vehicle, i.e. information describing the situation of the vehicle and of the surrounding mobile objects, with respect to the above-mentioned stationary elements of the infrastructure, including predicted or estimated information as explained above.

Overall, these situations involve as particularly illustrated in Figures 3A-B:
- the ego vehicle 1 moving on a road R in a motion direction A, on the right lane of the road (alternatively, it could be the left lane in appropriate countries).The road might alternatively include more than two lanes.
- at least one object O located on the road ahead of the ego vehicle and which either is stationary, thereby causing the ego vehicle to stop, or the speed thereof is so low that it will cause the ego vehicle to stop (such an object is considered as an example of a 'stop evenf); for the sake of easiness, the object O is represented by a preceding vehicle (car, bus, truck such as a delivery truck etc.) although it may take various forms: a vehicle that is double parked on the right lane, an obstacle fallen on the road, a road sign, road works, a bus stop etc..
- a possible cross traffic illustrated by an arrow denoted CT (although it has been represented oriented to the left direction, it may alternatively be oriented to the right direction; such right-to-left oriented possible cross traffic would also be taken into account in countries where the circulation along motion direction A takes place on the left lane); such possible cross traffic may take place at a location called cross traffic location, CTL, which is located on the road where the ego vehicle is moving (more particularly the lane of the road where the vehicle is moving) and where cross traffic is likely to occur from a lateral side of the longitudinal road (here the right lateral side where arrow CT is represented) or from another side or direction (see for instance the situation of Figure 4C) and which then flows from the right to the left (or the reverse in the alternate configuration) while crossing the road R in front of the ego vehicle, between the latter and the object O. Cross traffic may be represented by other vehicles that are likely to cross the road or pedestrians or any other mobile objects (ex: robots, animals etc.). Cross traffic locations may take different forms: a pedestrian crossing, a T junction (the location in the junction on which a lateral or side road opens out, possibly including the lateral or side road itself), a crossroads (the centre of the crossroads where all the roads open out on to, possibly including the latter from which cross traffic can occur) or more generally an intersection where several roads intersect, a lateral or side shop entry/exit that opens out on to the road where the ego vehicle is moving, a lateral or side fire brigade exit that opens out on to the road where the ego vehicle is moving, a lateral or side garage exit that opens out on to the road where the ego vehicle is moving, more generally a vehicle exit that opens out on to the road where the ego vehicle is moving etc. Thus, cross traffic can take place at a cross traffic location on the road where the ego vehicle is moving from many different spatial locations as mentioned above.

The presence of the above-described 'stop event' will normally cause the ego car to stop and the vehicle adaptive cruise control system 100 will take into account present and predicted situations in relation with the ego vehicle environment, in particular the above-described situations, to manage these situations and generate appropriate controls for the drive system 200.

Vehicle adaptive cruise control system 100 may comprise the following systems or sub-systems in the exemplary embodiment:
- a detection system is configured to detect possible events occurring ahead of the ego vehicle on and/or near the road where the latter is moving (information relating to the ego vehicle and its environment) and for which the ego vehicle will have to stop ("stop events' detection). Such events include the above-mentioned object O as well as a possible traffic jam involving a number of mobile objects (vehicles). The detection system uses the above described information that is generated/calculated by vehicle situation information unit 140, including the predicted or estimated information, in particular concerning the possible occurrence of a traffic jam and its probability of occurrence. The detection system may be formed by the two units 130 and 140. The detection system may be further configured to take into account the position, trajectory, speed and acceleration of one or more mobile objects (ex: vehicles) in the environment of the ego vehicle and the position of one or more stationary objects or elements (ex: the elements of the infrastructure such as the cross traffic locations as those described above) in this environment (past, present and predicted information). Thus, it will be possible to identify the possible 'stop event(s)' farther ahead on the road (in this respect, a probability or prediction of occurrence of a traffic jam greater than a predetermined threshold can be detected), the cross traffic location(s) between these 'stop event(s)' and the ego vehicle and the possible occurrence of cross traffic on or near the road where the vehicle is moving, i.e. cross traffic that is about to cross the cross traffic location(s), or cross traffic that is crossing the cross traffic location(s). The detection system may also be further configured to take into account traffic information (from the communication unit 120 and/or the navigation unit) and day time. Such information may be useful to associate the status of traffic flow with day time or instant time. Based on such information the predicted possible traffic flow may be better evaluated, which can be useful to detect whether cross traffic can occur at a cross traffic location with a higher degree of certainty (high probability).

- a stop location determination system 152 is configured to determine a stop location SL, as illustrated in Figure 3B, where the ego vehicle 1 will have to stop because of the occurring event O detected by the detection system. This stop location SL represents the theoretical or conventional stop location where the ego vehicle should normally stop in accordance with the practical driving rules and the Code of the Road and that are stored aboard the vehicle and guide its driving behaviour. The conventional stop location is basically decided by the conventional distance controller which can be installed in current cruise control systems; this can be different from implementation to implementation and also depending on vehicle configuration (e.g. USA, Japan or EU) and vehicle setting (close or far following distance setting in the vehicle). In particular, where the object O is a preceding vehicle, a standard distance between the latter and the ego vehicle has to be complied with, which therefore sets the stop location SL. Stop location determination system 152 may be part of prediction module 150 as illustrated in Figure 1.
- a cross traffic location determination system 160 is configured to determine whether the stop location SL determined by the stop location determination system 152 is a cross traffic location CTL where cross traffic CT can occur. Cross traffic location determination system 160 uses vehicle situation information generated by unit 140 and, in particular, information obtained from cameras, radar(s) and navigation unit in order to identify cross traffic scenes and cross traffic locations (ex: pedestrian crossings, vehicle exits etc.). In the example of Figure 3B the determined stop location SL is a cross traffic location CTL where cross traffic CT can occur. If the ego vehicle 1 would follow these instructions for stopping at the determined stop location SL, then it would obstruct the possible transverse cross traffic flow CT, which could overall impede the traffic flow on the road.
- the adaptive control system 170 is configured to adapt at least one driving control of the ego vehicle 1, based on the determination that the determined stop location SL is a cross traffic location. In the example of Figure 3B, the adaptive control system 170 generates a driving control that is adapted to cause the ego vehicle to stop before the cross traffic location CTL, i.e. at a distance from the ego vehicle that is shorter than the distance to the determined stop location SL. The ego vehicle 1 will then stop at an adapted stop location ASL which is distant from the determined stop location SL and located between the ego vehicle and the determined stop location SL, i.e. closer to the ego vehicle than the determined stop location SL. In other words, the ego vehicle will stop at a longer distance (stop distance) from the preceding object (e.g. a vehicle) than with conventional systems which generally do not take into account cross traffic locations, possible cross traffic and associated possible traffic flow obstruction (with these conventional systems it is not checked whether the determined stop location is a cross traffic location).

Thus, cross traffic location CTL where cross traffic CT can occur will be kept free, thereby enabling cross traffic flow in a transverse direction relative to the road. The traffic flow on the road will therefore be improved overall and travel times will be reduced.

More particularly, the adapted stop location ASL may be chosen so that a vehicle or a pedestrian (possible cross traffic) can cross the road and pass between the ego vehicle 1 and the object O.

Further, the adapted stop location ASL (stop distance) may be chosen based on one of the following, depending on the circumstances:
- a width of a crossing path together with a predetermined margin (the crossing path may be a pedestrian crossing); a predetermined margin (distance value) is thus added to the width so as to ensure that the ASL will not contact the crossing path (cross traffic location) and will be sufficiently distant thereof to avoid any risk of obstructing the crossing path and any possible risk of collision; possible margins can be obtained by mere experiments and calculations;
- a width of a vehicle lane together with a predetermined margin (the vehicle lane may be that one of a road crossing the road on which the vehicle is moving ahead of the latter, such as a transverse road); all what has been mentioned above concerning the predetermined margin applies here to the vehicle lane;
- a width of two vehicle lanes together with a predetermined margin (this is the case when cross traffic can occur in both directions and the two lanes are lying side by side on the road, such as a transverse road); all what has been mentioned above concerning the predetermined margin applies here to the two vehicle lanes.

The adapted driving control is here a longitudinal control such as a longitudinal brake control that is sent to the brakes of the drive system 200.

Thanks to the adaptive cruise control system 100, the situation where the ego vehicle will have to stop because of an event occurring on the road (and forcing the ego vehicle to stop) and possible cross traffic as well as associated possible traffic flow obstruction can happen between the event and the ego vehicle is anticipated and thus avoided.

To be noted that the adaptive control system 160 may be further configured to adapt at least one driving control of the vehicle, based on the possible detection of occurrence or absence of occurrence of cross traffic on or near the road where the ego vehicle 1 is moving. Thus, in the absence of occurrence of cross traffic or, in case the predicted module determines that the probability of absence of occurrence of cross traffic is greater than a predetermined threshold, although a cross traffic location has been detected/identified, then it is not necessary to leave free the cross traffic location and the driving control(s) is adapted accordingly (trajectory, speed and acceleration of the vehicle). In contrast, if occurrence of cross traffic is detected or, in case the predicted module determines that the probability of occurrence of cross traffic is greater than a predetermined threshold, then it is necessary to leave free the cross traffic location and the driving control(s) is adapted accordingly.

More concrete examples are illustrated on Figures 4A-C which show specific situations where the present adaptive cruise control system may intervene.

Figure 4A illustrates a specific environment for the ego vehicle 1 moving on the right lane of road R along motion direction A and about to arrive at a T junction where lateral or side road R' represents the road from which possible cross traffic can occur. The object O ahead of the ego vehicle, just located beyond the T junction, is stationary (either permanently or temporary if it is a stopped vehicle) and requires stop of the ego vehicle 1. However, according to the conventional rules (in particular, those rules concerning standard distance between two consecutive vehicles if the obstacle O is a preceding vehicle), the determined stop location SL is placed at the junction (intersection) between road R and side road R', i.e. on the way of possible cross traffic. If the ego vehicle 1 stops at this determined place, it will obstruct cross traffic flow from road R', in particular from vehicle V1 which intends to pass in front of the ego vehicle as represented by the dashed lines (intention of passing could be detected by a blinking side indicator of vehicle V1). In this example, another vehicle V2 is moving on the same road R in the opposite direction but does not seem to intend to turn into side road R' (no detection of a blinking side indicator (turn indicator) for vehicle V2 in this example).

Thanks to the present adaptive cruise control system driving of the ego vehicle 1 is controlled in an adaptive way so that the latter will be caused to stop at the ASL located before the junction with the side road R' (with adaptive driving control(s) such as here a longitudinal brake control) so as not to impede cross traffic coming from road R'.

In this example the present adaptive cruise control system may also detect and take into account the occurrence or absence of occurrence of cross traffic before determining how the driving control(s) should be adapted. In the present example cross traffic has been detected/identified which thus leads to stop the ego vehicle before arriving at the cross traffic location. However, in case no cross traffic has been detected/identified or the probability of occurrence of cross traffic is less than a predetermined threshold (this probability/prediction may be based inter alia on traffic information and day time), the driving control(s) can be adapted differently so that the ego vehicle can stop at the cross traffic location, at the determined SL.

To be noted that the vehicle V2 could also represent an additional source of cross traffic which could be detected by detecting its blinking side indicator.

Figure 4B illustrates another example where cross traffic flow is represented by a pedestrian that intends to cross the road R (cross traffic location CTL) where the ego vehicle 1 is moving.

Here also, the present adaptive cruise control system makes it possible to stop the ego vehicle at a longer distance from the object O (than conventionally determined), at an adapted stop location ASL that is located at a distance from the pedestrian crossing so as not to obstruct the possible cross traffic flow (pedestrian crossing the road transversely) that can occur on this pedestrian crossing. The same remarks as those mentioned above in relation with Figure 4A also apply here.

Figure 4C depicts still another example of an intersection, here a crossroads (cross traffic location CTL), with vehicles V1, V2 and V3 which are all candidates for possibly generating cross traffic flow with regard to the ego vehicle 1 that is moving on the road R in direction A, as already explained in the other examples.

In this example, both vehicles V1 and V3 that are located respectively on either side of the transverse road R" can each move towards the centre of the crossroads CTL (cross traffic flow).

Further, the vehicle V2 which is moving on the same road R as ego vehicle 1 but in the opposite direction is about to turn on the right into side road R", as detected by visualizing its blinking side indicator, and can represent additional cross traffic flow that can occur at the crossroads.

If the determined stop location SL is located as illustrated in Figure 4C, i.e. at the cross traffic location, controlling the ego vehicle 1 so that it stops at SL, would impede the traffic flow at the crossroads.

The present adaptive cruise control system makes it possible to adapt the ego vehicle driving control(s) so that it will stop at an adapted stop location ASL that is located before the crossroads, i.e. before joining side road R" (intersection with side road R"). Thus, this adapted stop location will make it possible not to obstruct cross traffic flow. The same remarks as those mentioned above in relation with Figure 4A also apply here.

In the example of Figure 4C cross traffic occurs from a combination of different directions (right, left and in front) at the same time or shifted in time whatever the order. However, only one or two among these different directions could lead to cross traffic at this intersection. To be noted that, according to other exemplary embodiments, in each of the above depicted situations two or more cross traffic locations could exist between the ego vehicle 1 and the object O ahead of the latter (ex: the pedestrian crossing of Figure 4B could be located before an intersection such as that of Figure 4A or 4C). In such situations, the present adaptive cruise control system takes into account the cross traffic location that is closer to the ego vehicle in order to adapt its driving control(s). Further, the possibility of occurrence of cross traffic at each of the cross traffic locations may be taken into account and, for instance, may lead to adapt the driving control(s) of the ego vehicle based on the cross traffic location where actual cross traffic takes place or is likely to take place (according to a probabilistic approach).

It is to be noted that in the above examples that involve other vehicles the vehicle situation information of the ego vehicle 1 comprises inter alia information about the future estimated positions, trajectories, speeds, accelerations of the ego vehicle 1 and of the other vehicles, possibly traffic information and day time, as well as information relating to the position of one or more stationary objects, such as infrastructure elements as described above. Information that is detected such as the blinking side indicator of a vehicle (as mentioned in the above examples) is also included in the vehicle situation information.

In all the examples illustrated on the Figures, the road where the ego vehicle 1 is moving is a straight one whereas the present disclosure also applies to situations occurring on roads which are at least partly curved. The adapted driving control(s) will therefore also involve control for turning the vehicle.

According to the present disclosure a method for adapting cruise control of an ego vehicle is also envisaged. This method makes it possible, when implemented on the vehicle such as vehicle 1, to adapt the vehicle behaviour to situations where the ego vehicle will have to stop because of an event occurring on the road (and forcing the ego vehicle to stop) and possible cross traffic can take place between the event and the ego vehicle.

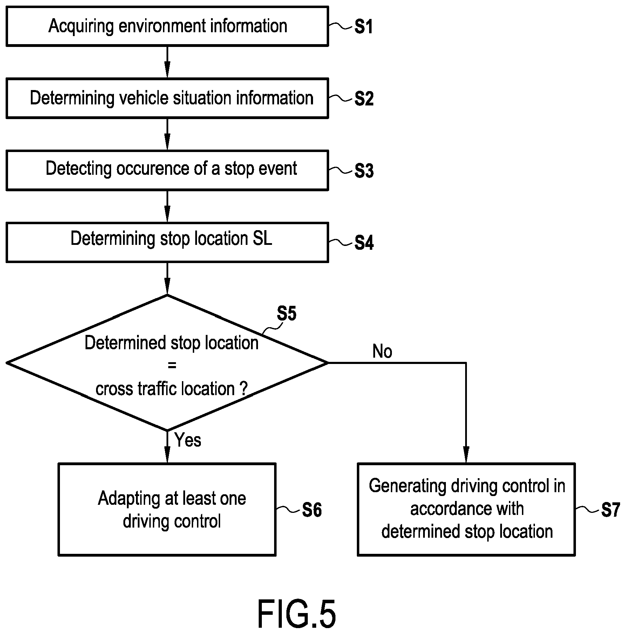

The method is illustrated in Figure 5 under the form of successive steps.

The method starts with steps S1 for acquiring environmental information relative to the ego vehicle and S2 for determining vehicle situation information based on the acquired environmental information. These steps are optional for the present method to the extent that the above-described situation information of the ego vehicle, i.e. information describing the situation of the ego vehicle and of the surrounding mobile objects, with respect to the elements of the infrastructure, including predicted or estimated information as explained above, can be obtained prior to implementing the present adaptive cruise control method or in another manner.

The present adaptive cruise control method comprises the following steps:
S3) detecting occurrence of a 'stop event' O on the road ahead of the ego vehicle, i.e. an event that will cause the ego vehicle to stop such as a traffic jam (the probability of occurrence of a traffic jam that is greater than a predetermined threshold may be used) or an object on the road such as already explained above: a stationary preceding vehicle, an object fallen on the road, roadworks, road signs on the road, a bus stop, etc.
S4) determining a stop location SL, as illustrated in Figure 3B, where the ego vehicle 1 will have to stop because of the previously detected occurring 'stop event' O.
S5) determining whether the previously determined stop location SL is a cross traffic location CTL where cross traffic CT can occur. This is a comparison step which can lead to two different situations. Firstly, the determined stop location SL is a cross traffic location CTL where cross traffic CT can occur, as illustrated in Figure 3B. In this situation, step S5 is followed by the following step:
   S6) adapting at least one driving control of the ego vehicle, based on the determination that the determined stop location SL is a cross traffic location CTL.

In the example of Figure 3B, a driving control that is adapted to cause the ego vehicle to stop before the cross traffic location, i.e. at an adapted stop location ASL, is generated (ex: a longitudinal control) as explained above. Further, if the occurrence or absence of occurrence of cross traffic is detected and taken into account before determining how the driving control(s) should be adapted, then the driving control(s) may be different according to the result of the detection. In particular, if cross traffic has been detected/identified, thus, adapted driving control(s) as explained above is generated to cause the ego vehicle to stop before arriving at the cross traffic location. However, in case no cross traffic has been detected/identified or the probability of occurrence of cross traffic is less than a threshold (this probability/prediction may be determined based inter alia on traffic information and day time), the driving control(s) can be adapted differently so that the ego vehicle can stop at the cross traffic location, at the determined SL.

In contrast, if the determined stop location SL is not a cross traffic location CTL where cross traffic CT can occur, then step S5 is followed by the following step:
S7) generating a driving control which, when sent to drive system 200, will cause the ego vehicle to stop at the determined stop location SL without incurring the risk of blocking a possible, e.g. transverse, cross traffic flow. This step is the same as the step performed when no cross traffic has been detected/identified or the probability of occurrence of cross traffic is less than a threshold as explained above. However, the situation is different since the above determined SL is a cross traffic location and a decision is taken so as not to stop before the cross traffic location for the reasons given above.

In a general manner, the above method makes it possible to improve traffic flow by managing specific situations which could otherwise lead to generating traffic flow impediment.

## Claims

1. A vehicle adaptive cruise control system (100) for a vehicle (1), comprising:
a stop location determination system (152) configured to determine a stop location (SL) where the vehicle will have to stop because of a possible event occurring ahead of the vehicle on or near a road (R) where the latter is moving ;
a cross traffic location determination system (160) configured to determine whether the determined stop location (SL) is a location where cross traffic can occur, called cross traffic location (CTL);
an adaptive control system (170) configured to adapt at least one driving control of the vehicle, based on the determination that the determined stop location (SL) is a cross traffic location (CTL).

2. The vehicle adaptive cruise control system according to claim 1, wherein the adaptive control system (170) is configured to adapt said at least one driving control so as to cause the vehicle to stop at an adapted stop location (ASL) that is located closer than the determined stop location with respect to the vehicle.

3. The vehicle adaptive cruise control system according to the preceding claim, wherein the adapted stop location (ASL) is chosen so that another vehicle or a pedestrian can cross the road where the vehicle (1) is moving and pass between the vehicle (1) and an object located ahead of the vehicle (1).

4. The vehicle adaptive cruise control system according to claim 2 or 3, wherein the adapted stop location (ASL) is chosen based on one of the following: a width of a crossing path together with a predetermined margin, a width of a vehicle lane together with a predetermined margin, a width of two vehicle lanes together with a predetermined margin, a size of another vehicle that can cross the road where the vehicle (1) is moving.

5. The vehicle adaptive cruise control system according to any preceding claim, further comprising a detection system (130; 140) configured to detect possible events occurring ahead of the vehicle (1) on or near the road where the latter is moving and for which the vehicle will have to stop.

6. The vehicle adaptive cruise control system according to the preceding claim, wherein the detection system (130; 140) is further configured to detect possible occurrence of cross traffic on or near the road where the vehicle is moving.

7. The vehicle adaptive cruise control system according to the preceding claim, wherein the detection system (130; 140) is further configured to take into account traffic information and day time.

8. The vehicle adaptive cruise control system according to claim 6 or 7, wherein the adaptive control system (170) is further configured to adapt at least one driving control of the vehicle, based on the possible occurrence or absence of occurrence of cross traffic on or near the road where the vehicle (1) is moving.

9. The vehicle adaptive cruise control system according to any of claims 5 to 8, wherein the detection system (130; 140) includes a probabilistic detection system.

10. The vehicle adaptive cruise control system according to any preceding claim, wherein said at least one driving control includes a longitudinal control.

11. The vehicle adaptive cruise control system according to any preceding claim, wherein the cross traffic location determination system (160) is configured to obtain information from one or more cameras and/or a vehicle navigation system.

12. A vehicle (1) comprising a vehicle cruise control system (100) according to any preceding claim.

13. A vehicle adaptive cruise control method for controlling operation of a vehicle (1), comprising:
determining (S4) a stop location (SL) where the vehicle will have to stop because of a possible event (O) occurring ahead of the vehicle on or near a road (R) where the latter is moving;
determining (S5) whether the determined stop location (SL) is a location where cross traffic can occur, called cross traffic location (CTL);
adapting (S6) at least one driving control of the vehicle, based on determining that the determined stop location (SL) is a cross traffic location (CTL).

14. A computer program comprising instructions which, when the program is executed by a computer, cause the computer to carry out the steps of a method according to claim 13.

15. A non-transitory computer readable medium having stored thereon a computer program according to claim 14.

## Amended claims

### Amended claims in accordance with Rule 137(2) EPC.

1. A vehicle adaptive cruise control system (100) for a vehicle (1), comprising:
a stop location determination system (152) configured to determine a stop location (SL) where the vehicle will have to stop because of a possible event occurring ahead of the vehicle on or near a road (R) where the latter is moving ;
a cross traffic location determination system (160) configured to determine whether the determined stop location (SL) is a location where cross traffic can occur, called cross traffic location (CTL);
an adaptive control system (170) configured to adapt at least one driving control of the vehicle, based on the determination that the determined stop location (SL) is a cross traffic location (CTL),
the vehicle adaptive cruise control system (100) further comprises a detection system (130; 140) configured to detect:
possible events occurring ahead of the vehicle (1) on or near the road where the latter is moving and for which the vehicle will have to stop,
and possible occurrence of cross traffic on or near the road where the vehicle is moving,
wherein the detection system (130; 140) is further configured to take into account traffic information and day time.

2. The vehicle adaptive cruise control system according to claim 1, wherein the adaptive control system (170) is configured to adapt said at least one driving control so as to cause the vehicle to stop at an adapted stop location (ASL) that is located closer than the determined stop location (SL) with respect to the vehicle.

3. The vehicle adaptive cruise control system according to the preceding claim, wherein the adapted stop location (ASL) is located at a distance from the determined stop location (SL) so as to leave sufficient distance between the determined stop location (SL) and the vehicle (1) for another vehicle or a pedestrian to cross the road where the vehicle (1) is moving and pass between the vehicle (1) and an object located ahead of the vehicle (1).

4. The vehicle adaptive cruise control system according to claim 2 or 3, wherein the adapted stop location (ASL) is chosen based on one of the following: a width of a crossing path together with a predetermined margin, a width of a vehicle lane together with a predetermined margin, a width of two vehicle lanes together with a predetermined margin, a size of another vehicle that can cross the road where the vehicle (1) is moving.

5. The vehicle adaptive cruise control system according to claim 1, wherein the adaptive control system (170) is further configured to adapt at least one driving control of the vehicle, based on the possible occurrence or absence of occurrence of cross traffic on or near the road where the vehicle (1) is moving.

6. The vehicle adaptive cruise control system according to claim 1 or 5, wherein the detection system (130; 140) includes a probabilistic detection system.

7. The vehicle adaptive cruise control system according to any preceding claim, wherein said at least one driving control includes a longitudinal control.

8. The vehicle adaptive cruise control system according to any preceding claim, wherein the cross traffic location determination system (160) is configured to obtain information from one or more cameras and/or a vehicle navigation system.

9. A vehicle (1) comprising a vehicle adaptive cruise control system (100) according to any preceding claim.

10. A vehicle adaptive cruise control method for controlling operation of a vehicle (1), comprising:
determining (S4) a stop location (SL) where the vehicle will have to stop because of a possible event (O) occurring ahead of the vehicle on or near a road (R) where the latter is moving;
determining (S5) whether the determined stop location (SL) is a location where cross traffic can occur, called cross traffic location (CTL);
adapting (S6) at least one driving control of the vehicle, based on determining that the determined stop location (SL) is a cross traffic location (CTL),
detecting possible events occurring ahead of the vehicle (1) on or near the road where the latter is moving and for which the vehicle will have to stop,
detecting possible events further comprising detecting possible occurrence of cross traffic on or near the road where the vehicle is moving, and taking into account traffic information and day time.

11. A computer program comprising instructions which, when the program is executed by a computer, cause the computer to carry out the steps of a method according to claim 10.

12. A non-transitory computer readable medium having stored thereon a computer program according to claim 11.
